# EUROPÄISCHE PATENTSCHRIFT

(11) **EP 0 715 967 B1**
(45) Veröffentlichungstag und Bekanntmachung des Hinweises auf die Patenterteilung: **21.10.1998**
(21) Anmeldenummer: 95113108.5
(22) Anmeldetag: 21.08.1995
(51) Int. Cl.: B42D 15/10, B29C 65/00

(54) **Verfahren zum Herstellen von Kunststoffkarten**
Method for making plastic cards
Méthode pour la fabrication de cartes plastiques

(30) Priorität: 07.12.1994 DE 4443438
(43) Veröffentlichungstag der Anmeldung: 12.06.1996
(73) Patentinhaber: MELZER MASCHINENBAU GmbH, D-58332 Schwelm (DE)
(72) Erfinder: Melzer, Rainer, D-58332 Schwelm (DE); Melzer, Roland, D-58332 Schwelm (DE)
(74) Vertreter: Sparing - Röhl - Henseler Patentanwälte

(56) Entgegenhaltungen:
- EP-A- 0 468 842
- DE-A- 3 121 992
- DE-A- 3 524 964
- DE-A- 3 809 907
- US-A- 5 221 409
- US-A- 5 313 758

## Beschreibung

Die Erfindung betrifft ein Verfahren zum Herstellen von Kunststoffkarten, wie sie millionenfach als Kreditkarten, Telefonkarten, Ausweiskarten und so weiter im Gebrauch sind.

Bei der Herstellung solcher Karten geht man von einem Substrat aus, und nach einer Reihe von Arbeitsgängen werden aus diesem die Karten ausgeschnitten. Das Ausgangssubstrat kann entweder in Form von Bögen vorliegen, die Platz für z.B. 48 Karten bieten, oder in Form von zu einer Bobine aufgewickeltem streifenförmigem Material.

Bei der Kartenherstellung gibt es Arbeitsgänge, bei denen Bögen als Ausgangsmaterial günstiger sind als Streifen. Dazu gehört beispielsweise das Bedrucken. Streifenförmiges Substrat ist bei anderen Arbeitsgängen günstiger; dazu gehört beispielsweise das Ausstanzen der Karten oder das Einfräsen von Ausnehmungen für das Einfügen von elektronischen Schaltkreisen. Für den letztgenannten Arbeitsgang ist beispielsweise auf die noch nicht veröffentlichte deutsche Patentanmeldung P 44 33 076 zu verweisen.

Die Erfindung beruht auf der Idee, von bogenförmigem Material auszugehen, dieses bestimmten Arbeitsgängen zu unterwerfen -- beispielsweise dem Bedrucken --, dann die Bögen in Streifen zu unterteilen und diese aneinander zu heften, so daß sie als Bahn endlos durch weitere Arbeitsstationen gefördert werden können.

Das Verbinden der Streifen ist angesichts der extremen Genauigkeitsanforderungen bei der Kunststoffkartenherstellung problematisch. Das Verkleben auf Stoß wäre den erheblichen Zugbelastungen, die auf die Bahn einwirken, wohl nicht gewachsen. Eine thermische Heftung, etwa ein Ultraschallverschweißen, führt zu wenig haltbaren Verbindungen, da die Stöße der Streifen für die Sonotroden nur parallel zu den zu verbindenden Flächen zugänglich sind. Eine überlappende Verbindung, die sich sowohl kleben als auch ultraschallschweißen ließe, scheidet aus, weil die dabei entstehenden Stufen in den nachfolgenden Bearbeitungsstationen stören.

Die vorliegende Erfindung schafft ein Verfahren zum Herstellen einer hohen Zugbelastungen standhaltenden und stufenfreien Verbindung zwischen den Streifen und damit ein Verfahren zum Herstellen von Kunststoffkarten, bei dem Substratstreifen zu einer endlos durch Bearbeitungsstationen transportierten Bahn dadurch verbunden werden, daß die quer verlaufenden Endkanten aneinandergrenzender Streifen mit hinterschnittenen Vorsprüngen und dazu komplementären Ausnehmungen versehen werden und die Vorsprünge der Streifen in die zugehörigen Ausnehmungen des jeweils anderen Streifens gedrückt werden.

Die Streifenenden greifen auf diese Weise nach Art eines Puzzles formschlüssig ineinander. Zusätzlich kann man eine thermische Heftung vornehmen, die dazu dient, den Formschluß zu sichern; dies ist wichtig für den Fall, daß die aus den Streifen gebildete Bahn zu einer Bobine zwecks Zwischenlagerung aufgerollt wird, bevor sie fertigbearbeitet wird.

Für den Formschluß steht nur eine begrenzte Tiefe, nämlich die Breite des Stanzgitters zwischen zwei Nutzen, zur Verfügung. Diese geringe Tiefe muß so ausgenutzt werden, daß maximale Zugfestigkeit erhalten wird; hierfür hat sich eine teilellipsenförmige Kontur der Vorsprünge und Ausnehmungen als günstig erwiesen.

Zwar kann die Herstellung der Konturen mittels irgendwelcher bekannter Verfahren erfolgen, doch ist angesichts der Materialstärke von nur etwa 0,8 mm und wegen der erforderlichen Reproduzierbarkeit das Stanzen bevorzugt.

Anstatt die Bahn zu einer Bobine zu wickeln, kann man die Streifen auch in einem Magazin ablegen und die Verbindung erst unmittelbar vor dem Einlauf in eine Bearbeitungsstation herstellen.

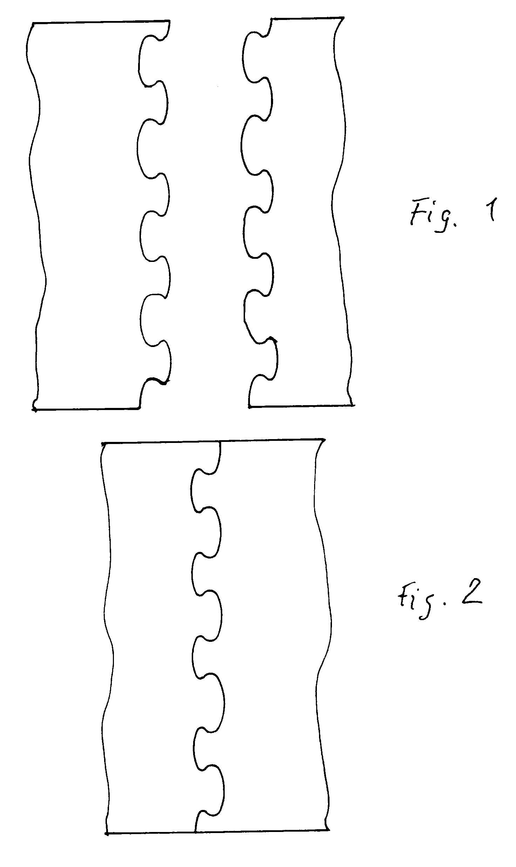

Die beigefügte Zeichnung stellt die Verbindungsstelle zweier Streifen dar, und zwar in Fig. 1 vor dem Fügen und in Fig. 2 im gefügten Zustand. Man erkennt, daß jeder Vorsprung (und jede Ausnehmung) etwa die Form einer Dreiviertel-Ellipse aufweist.

## Patentansprüche

1. Verfahren zum Herstellen von Kunststoffkarten mit den Schritten:
- Ausführen von ersten Arbeitsgängen, bei denen das Kunststoffmaterial in Form von Bögen bearbeitet, insbesondere bedruckt wird, wobei die Kanten der Nutzen parallel zu den Kanten der Bögen verlaufen und die Nutzen von Leerstegen umgeben sind,
- Zerschneiden der Bögen parallel zu deren Kanten in Streifen, die jeweils mindestens eine Reihe von Nutzen mit Leerstegen an beiden Streifenenden aufweisen,
- Aneinanderheften der Streifen zu einer endlos durch weitere Bearbeitungsstationen zu transportierenden Bahn, indem in an sich bekannter Weise die Leerstege am Anfang und am Ende der Streifen mit hinterschnittenen Vorsprüngen und dazu komplementären Ausnehmungen versehen werden und die Vorsprünge eines Streifens in die Ausnehmungen des folgenden Streifens gedrückt werden.

2. Verfahren nach Anspruch 1, bei dem im Bereich der Ausnehmungen und Vorsprünge zusätzlich eine thermische Heftung erfolgt.

3. Verfahren nach Anspruch 1 oder 2, bei dem die Kontur jedes Vorsprungs bzw. jeder Ausnehmung teilellipsenförmig ist.

4. Verfahren nach einem der Ansprüche 1 bis 3, bei dem die Vorsprünge und Ausnehmungen gestanzt werden.

5. Verfahren nach einem der Ansprüche 1 bis 4, bei dem die Verbindung der in einem Magazin abgelegten Streifen vor dem Einlauf in eine Arbeitsstation erfolgt.

6. Verfahren nach einem der Ansprüche 1 bis 4, bei dem die aus den verbundenen Streifen gebildete Bahn zu einer Bobine aufgewickelt wird.

## Claims

1. Method for manufacturing of plastic cards including the steps of:
- performing of first operations wherein the plastic material having the form of sheets is treated, in particular is printed on, the edges of the to-be-formed cards extending parallel to edges of the sheets, and the to-be-formed cards being surrounded by void straps,
- cutting the sheets parallel to their edges to form strips each comprising a series of to-be-formed cards and void straps at both ends,
- interconnecting the strips to form an endless web to be transported through additional treatment stations in that in a manner known per se the void straps at the begin and at the end of the strips are provided with undercut projections and recesses complementary thereto and the projections of one strip are pressed into the recesses of the following strip.

2. Method as in claim 1 wherein in the area of projections and recesses an additional thermal bonding is performed.

3. Method as in claim 1 or 2 wherein the contour of each projection and recess, respectively, is partially elliptic.

4. Method as in one of claims 1 to 3 wherein the projections and recesses are punched.

5. Method as in one of claims 1 to 4 wherein the interconnection of strips placed in a magazine is performed prior to feed-in into a treatment station.

6. Method as in one of claims 1 to 4 wherein the web formed of the interconnected strips is wound thereby forming a bobbin.

## Revendications

1. Procédé de production de cartes en matériau synthétique avec les étapes suivantes :
- exécution de premières opérations où le matériau synthétique est travaillé sous forme de feuilles, en particulier est imprimé, les contours des motifs répétitifs imprimés étant parallèles aux bords des feuilles et ces motifs répétitifs imprimés étant entourés de garnitures vides,
- découpage des feuilles en bandes parallèlement à leurs bords, ces bandes présentant chacune au moins une rangée de motifs répétitifs avec des garnitures vides aux deux extrémités de la bande,
- assemblage des bandes l'une à l'autre en une ligne sans fin transportée à travers d'autres stations de travail ou d'usinage, par le fait que les garnitures au début et à la fin des bandes sont pourvues de manière connues en soi de saillies découpées à l'arrière et d'évidements complémentaires, les saillies d'une bande étant introduites à force dans les évidements de la bande suivante.

2. Procédé selon la revendication 1, dans lequel un assemblage thermique est effectué en plus dans la région des évidements et des saillies.

3. Procédé selon la revendication 1 ou 2, dans lequel le profil de chaque saillie, respectivement de chaque évidement est de forme partiellement elliptique.

4. Procédé selon l'une des revendications 1 à 3, dans lequel les saillies et les évidements sont obtenus par une matrice de découpage.

5. Procédé selon l'une des revendications 1 à 4, dans lequel la jonction des bandes déposées dans un magasin est effectuée avant l'introduction dans une station de travail.

6. Procédé selon l'une des revendications 1 à 4, dans lequel la ligne formée par les bandes jointes est enroulée sous forme d'une bobine.
